# EUROPEAN PATENT SPECIFICATION

(11) **EP 4 454 997 B1**
(45) Date of publication and mention of the grant of the patent: **17.12.2025**
(21) Application number: 24158098.4
(22) Date of filing: 16.02.2024
(51) Int. Cl.: B64C 1/06, B64C 1/12, B64C 1/14, B64C 3/26, B64D 29/08

(54) **FASTENING ASSEMBLY, FASTENING CONSTRUCTION AND AIRCRAFT**
BEFESTIGUNGSBAUGRUPPE, BEFESTIGUNGSKONSTRUKTION UND FLUGZEUG
ENSEMBLE DE FIXATION, CONSTRUCTION DE FIXATION ET AÉRONEF

(30) Priority: 27.04.2023 DE 102023110830
(43) Date of publication of application: 30.10.2024
(73) Proprietor: Airbus Defence and Space GmbH, 82024 Taufkirchen (DE)
(72) Inventor: BETHGE, Arne, 82024 Taufkirchen (DE); PETERS, Sebastian, 82024 Taufkirchen (DE)
(74) Representative: Isarpatent

(56) References cited:
- WO-A1-2020/012819
- WO-A1-2021/206074
- WO-A2-2022/177207
- US-A1- 2015 102 879
- US-B1- 10 811 903
- US-B1- 9 689 412

## Description

### TECHNICAL FIELD OF THE INVENTION

The present invention relates to a fastening assembly, to a fastening construction and to an aircraft.

### BACKGROUND OF THE INVENTION

When components, in particular electronic components, are installed in walls, it is often necessary to still provide access to said components. For this purpose, access hatches or panels are used which can easily be detachably connected to the rest of the wall in order to ensure relatively easy access to components located in the wall. When it comes to fastening means, screws or similar fastening means are often used as the simplest solution.

Since the fastening means used generally have to be accessible from the surface of the wall so that they can be opened, the panels used can sometimes have a complex design when specific requirements are imposed on the surface design.

In aircraft, this can be the case for example when the access panel is located on an outer shell of the aircraft, since in this case the aerodynamic properties of the aircraft should not be impaired by the access panel. Some aircraft, often in the military sector, are additionally provided with surface structures which have camouflage properties with respect to various sensors. The properties of such structures should also not be impaired by access panels.

Document US10811903B1 relates to wireless power electropermanent magnets and related systems and devices, including handheld wands for activating and deactivating wireless power electropermanent magnets, and coupling and locking mechanisms utilizing wireless power electropermanent magnets.

### SUMMARY OF THE INVENTION

Accordingly, the present invention addresses the problem of providing a fastening mechanism for access panels which allows any desired design of the surface shape.

This problem is solved by a fastening assembly having the features of Claim 1, a fastening construction having the features of Claim 5, and an aircraft having the features of Claim 9.

One concept on which the invention is based consists in the use of an electro-permanent magnet for fastening the panel to the base element. An electro-permanent magnet is a magnet having an external magnetic effect that can be switched on and off by a current pulse. For this purpose, an electromagnet having a core made of magnetically semi-hard material and a permanent magnet are generally used. If the semi-hard core is magnetized in the opposite direction to the hard core of the permanent magnet, then the external magnetic effects thereof cancel each other out. If the semi-hard core is magnetized in the same direction as the permanent magnet, then an external magnetic effect is present. It is also conceivable to use an electro-permanent magnet which comprises a permanent magnet and an electromagnet, the electromagnet being oriented in such a way that, during operation, it neutralizes the magnetic field of the permanent magnet in such a way that no external magnetic field occurs.

In both cases, electrical energy is required only to switch between the two states, and therefore the fastening construction does not require an energy source and can be kept in the fastened state for unlimited periods of time. Since the energy used to open and close the panel is transferred in a contactless manner, no surface elements are required for fastening, and therefore the surface can be designed independently of the opening and closing mechanism.

### BRIEF DESCRIPTION OF THE DRAWINGS

The invention will be described in the following with reference to the drawings, in which:
- Fig. 1: is a schematic view of an aircraft according to one exemplary embodiment of the present invention;
- Fig. 2: is a schematic view of a panel according to one exemplary embodiment of the present invention;
- Fig. 3: is a schematic cross-sectional view of a fastening construction according to one exemplary embodiment of the present invention; and
- Fig. 4: is a schematic view of an opening device according to one exemplary embodiment of the present invention.

In the drawings, the same reference signs denote like or functionally like components, unless stated otherwise.

### DETAILED DESCRIPTION OF EXEMPLARY EMBODIMENTS OF THE INVENTION

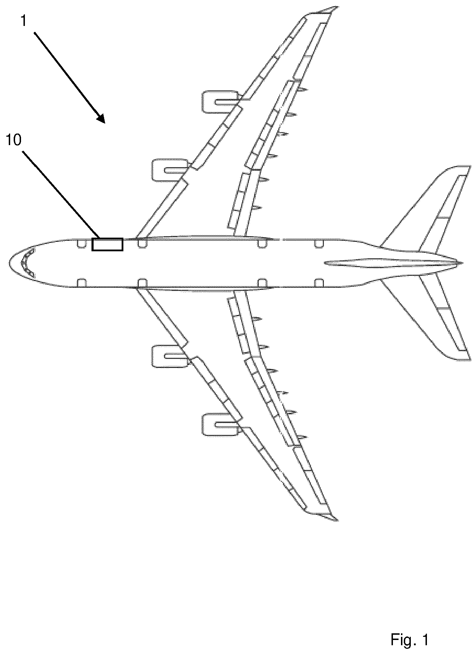

Fig. 1 is a schematic view of an aircraft 1 according to one exemplary embodiment of the present invention.

The aircraft vehicle 1 has a fastening construction 10. The fastening construction 10 is described in detail with reference to the following drawings.

In Fig. 1, the fastening construction 10 is arranged on an outer shell of the aircraft 1. In this position, a fastening construction 10 having the features of the present invention can be used particularly advantageously. However, a fastening construction 10 according to the invention can be used in any conceivable position of an aircraft 1 or of another aircraft or even of a building.

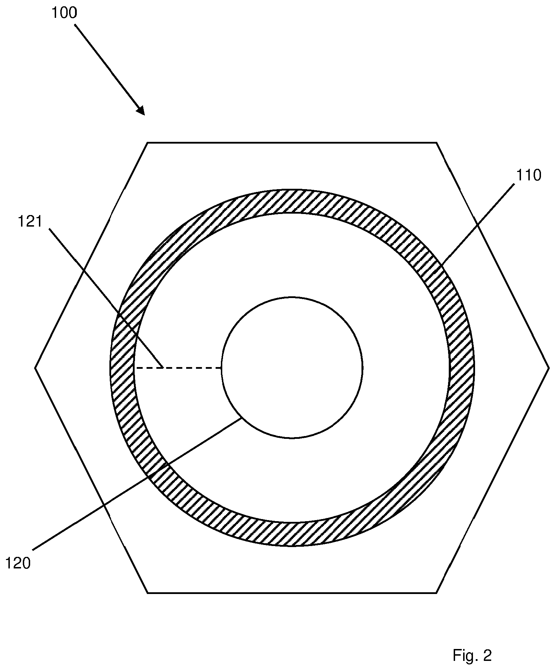

Fig. 2 is a schematic view of a panel 100 according to one exemplary embodiment of the present invention.

The panel 100 comprises an electro-permanent magnet 110 and an induction coil 120. The electro-permanent magnet 110 is integrated in the panel 100. The induction coil 120 is connected to the electro-permanent magnet 110 by means of an electrical connection 121. By means of the electrical connection 121, the induction coil 120 can conduct current induced therein to the electro-permanent magnet 110. By means of this current, the electro-permanent magnet 110 can be switched between a magnetic state and a non-magnetic state.

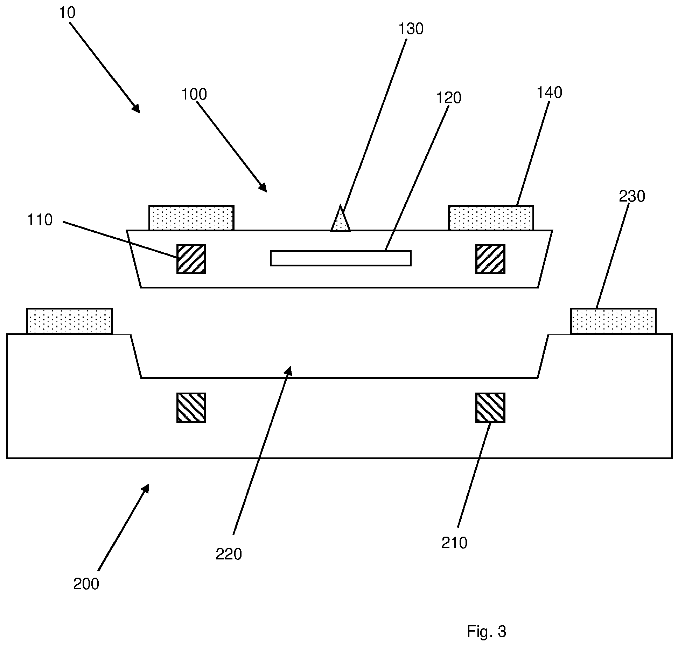

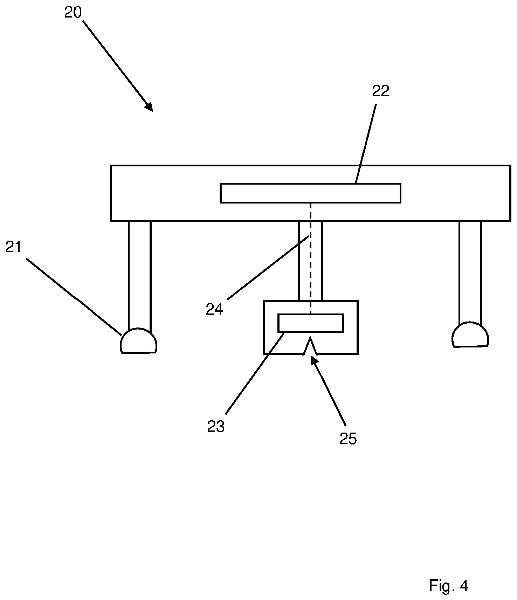

The precise function of the individual features of the panel 100 are described in greater detail in the following with reference to Figures 3 and 4.

Fig. 3 is a schematic cross-sectional view of a fastening construction 10 according to one exemplary embodiment of the present invention.

The fastening construction 10 comprises a panel 100 and a base element 200. The panel 100 has the same features as the panel shown in Figure 2. The induction coil 120 is integrated in the panel 100, wherein the panel 100 has an external mark 130 which is in the form of a surface structure and which indicates the position of the induction coil 120. The base element vehicle 200 has a ferromagnet 210. The **ferromagnet** 21 is designed to connect the panel 100 to the base element 200 when the electro-permanent magnet 110 of the panel 100 is in the magnetic state.

While the electro-permanent magnet 110 of the panel 100 is in a magnetic state, the magnetic pull between the electro-permanent magnet 110 and the ferromagnet 210 of the base element 200 ensures that the panel 100 stays rigidly connected to the base element 200. When a current pulse is induced in the induction coil 120 of the panel 100, this current pulse is transmitted to the electro-permanent magnet 110, as a result of which the electro-permanent magnet is switched to the non-magnetic state. Since there is no longer any magnetic pull between the panel 100 and the base element 200, the panel 100 can easily be removed. At a later point in time, the panel 100 can be brought back into position, and the electro-permanent magnet 110 can be switched back to the magnetic state by inducing a new current pulse in the induction coil 120, as a result of which the connection between the panel 100 and the base element 200 is restored. In this case, the ferromagnet 210 itself can be in the form of a permanent magnet or can merely be attracted by the electro-permanent magnet 110 which is in a magnetic state. By way of example, the ferromagnet 210 can consist of iron. In the case of an electro-permanent magnet 110 which is in the magnetic state when it is not supplied with current and is in the non-magnetic state when it is supplied with current, current is induced through the induction coil 120 for the entire opening process.

The base element 200 has a recess 220 which is adapted to the shape of the panel 100 and is designed in such a way that a surface of the panel 100 is positively connected to a surface of the base element when the panel 100 is arranged in the recess 220. In the exemplary embodiment shown here, both the panel 100 and the recess 220 have a trapezoidal cross section. However, the fastening construction according to the invention is not limited to such cross-sectional shapes. By means of the positive connection of the surfaces of the panel 100 and the base element 200, the surface properties, for example the aerodynamic properties, can advantageously be coordinated, since the magnets 110, 210 for fastening the panel 100 to the base element 200 are not located on the surface and therefore can be ignored for the design of each of the surfaces.

The external mark in the form of a surface structure 130 is used to indicate the position of the induction coil 120 so that a current can be reliably induced in the induction coil 120. In the present exemplary embodiment, the external mark 130 consists of a pyramid-shaped structure which is arranged so as to be centred over the induction coil 120. An external mark 130 could also be arranged in an annular shape covering the induction coil 120 or could have any other desired shape. Instead of a surface structure, coloured marks can also be provided.

The surface of the panel 100 and the surface of the base element 200 each have a camouflage surface structure 140 and 230. This is a particularly advantageous design which is made possible by the fastening construction 10 according to the invention. In particular, the external mark 130 in the form of a surface structure can also be integrated in the camouflage surface structure 140.

Fig. 4 is a schematic view of an opening device 20 according to one exemplary embodiment of the present invention.

The opening device 20 comprises two receiving elements 21, an electrical energy source 22 and an induction coil 23. The receiving elements 21 are designed to produce a detachable connection to a panel, in particular to a panel as shown in Figures 2 and 3. The induction coil 23 is connected to the electrical energy source 22 by means of an electrical connection 24. By means of this connection to the electrical energy source 22, the induction coil 23 of the opening device 23 can induce a current in an induction coil of a panel when the receiving elements 21 are connected to the panel.

By means of the opening device 20 shown here, the panel can be removed from and reinserted in a fastening construction as shown in Fig. 3. For this purpose, the opening device 20 can comprise a switching device (not shown) in order to produce a current pulse which can be induced in the panel through the induction coil 23 of the opening device 20. The opening device 20 can also comprise an ergonomically designed handle to simplify the handling of the opening device 20.

In the exemplary embodiment shown here, the electrical energy source 22 is shown as a component of the opening device 20. For this purpose, for example a battery can be provided. It is also conceivable to provide an electrical energy source 22 externally to the opening device 20 and to connect the opening device 20 to an external electrical energy source 22 of this type for example by means of a cable.

The precise function of the receiving elements 21 is not shown here, since there are many design possibilities for these elements. By way of example, suction cups which receive the panel by means of a vacuum are conceivable. Other alternatives would also be hook or plug-in connections, or magnetic/electromagnetic connections. The number and the arrangement of the receiving elements 21 can also be selected as required.

The opening device 20 shown here additionally comprises a recess 25, which is used to align the opening device 20 in combination with the external mark, in the form of a surface structure, of the panel shown in Fig. 3.

### LIST OF REFERENCE SIGNS

- 1: aircraft
- 10: fastening construction
- 20: opening device
- 21: receiving element
- 22: electrical energy source
- 23: induction coil
- 24: electrical connection
- 25: recess
- 100: panel
- 110: electro-permanent magnet
- 120: induction coil
- 121: electrical connection
- 130: external mark
- 140: camouflage surface structure
- 200: base element
- 210: ferromagnet
- 220: recess
- 230: camouflage surface structure

## Claims

1. Fastening assembly comprising
a panel (100), able to be detachable connected to an opening device (20), such that the panel (100) can be removed from and reinserted in a fastening construction (10) by means of the opening device (20), the panel (100) comprising an electro-permanent magnet (110) which is integrated in the panel (100); and
an induction coil (120) which is connected to the electro-permanent magnet (110) and is designed to conduct current induced in the induction coil (120) to the electro-permanent magnet (110) in such a way that the electro-permanent magnet (110) can be switched between a magnetic state and a non-magnetic state; the fastening assembly further comprising:
the opening device (20), comprising at least one receiving element (21) which is designed to produce a detachable connection to the panel (100) in order to remove and reinsert the panel (100) in the fastening construction (10);
an electrical energy source (22); and
an induction coil (23) which is connected to the electrical energy source (22) and is designed to induce a current in the induction coil (120) of the panel (100) when the at least one receiving element (21) is connected to the panel (100).

2. Fastening assembly according to Claim 1, wherein the induction coil unit (120) is integrated in the panel (100).

3. Fastening assembly according to Claim 2, wherein the panel (100) has an external mark (130) which indicates the position of the induction coil (120).

4. Fastening assembly according to Claim 3, wherein the external mark (130) is in the form of a surface structure.

5. Fastening construction (10) for use with the fastening assembly according to any of Claims 1 to 4; the fastening construction (10) comprising the panel (100) of said fastening assembly and further comprising a base element (200) having a ferromagnet (210) which is designed to connect the panel (100) to the base element (200) when the electro-permanent magnet (110) of the panel (100) is in the magnetic state.

6. Fastening construction (10) according to Claim 5,
wherein the base element (200) has a recess (220) which is adapted to the shape of the panel (100).

7. Fastening construction (10) according to Claim 6,
wherein the recess (220) is designed in such a way that a surface of the panel (100) is positively connected to a surface of the base element when the panel (100) is arranged in the recess (220).

8. Fastening construction (10) according to Claim 7,
wherein the surface of the panel (100) and the surface of the base element have a camouflage surface structure (140; 230).

9. Aircraft (1) comprising a fastening construction (10) according to any of Claims 5 to 8.

## Patentansprüche

1. Befestigungsanordnung, umfassend:
eine Platte (100), die lösbar mit einer Öffnungsvorrichtung (20) verbindbar ist, so dass die Platte (100) mittels der Öffnungsvorrichtung (20) aus einer Befestigungskonstruktion (10) entfernbar und wieder in diese einsetzbar ist, wobei die Platte (100) umfasst:
einen Elektropermanentmagneten (110), der in die Platte (100) integriert ist; und
eine Induktionsspule (120), die mit dem Elektropermanentmagneten (110) verbunden ist und dazu ausgelegt ist, in der Induktionsspule (120) induzierten Strom zum Elektropermanentmagneten (110) so zu leiten, dass der Elektropermanentmagnet (110) zwischen einem magnetischen Zustand und einem nichtmagnetischen Zustand umgeschaltet werden kann; wobei die Befestigungsanordnung ferner umfasst:
die Öffnungsvorrichtung (20), umfassend:
mindestens ein Aufnahmeelement (21), das dazu ausgelegt ist, eine lösbare Verbindung mit der Platte (100) herzustellen, um die Platte (100) aus der Befestigungskonstruktion (10) zu entfernen und wieder in diese einzusetzen;
eine Quelle für elektrische Energie (22); und
eine Induktionsspule (23), die mit der Quelle für elektrische Energie (22) verbunden ist und dazu ausgelegt ist, einen Strom in der Induktionsspule (120) der Platte (100) zu induzieren, wenn das mindestens eine Aufnahmeelement (21) mit der Platte (100) verbunden ist.

2. Befestigungsanordnung nach Anspruch 1,
wobei die Induktionsspuleneinheit (120) in die Platte (100) integriert ist.

3. Befestigungsanordnung nach Anspruch 2,
wobei die Platte (100) eine äußere Markierung (130) aufweist, die die Position der Induktionsspule (120) anzeigt.

4. Befestigungsanordnung nach Anspruch 3,
wobei die äußere Markierung (130) in Form einer Oberflächenstruktur vorliegt.

5. Befestigungskonstruktion (10) zur Verwendung mit der Befestigungsanordnung nach einem der Ansprüche 1 bis 4; wobei die Befestigungskonstruktion (10) die Platte (100) der Befestigungsanordnung umfasst und ferner umfasst:
ein Basiselement (200) mit einem Ferromagneten (210), der dazu ausgelegt ist, die Platte (100) mit dem Basiselement (200) zu verbinden, wenn sich der Elektropermanentmagnet (110) der Platte (100) im magnetischen Zustand befindet.

6. Befestigungskonstruktion (10) nach Anspruch 5,
wobei das Basiselement (200) eine Aussparung (220) aufweist, die an die Form der Platte (100) angepasst ist.

7. Befestigungskonstruktion (10) nach Anspruch 6,
wobei die Aussparung (220) so ausgelegt ist, dass eine Oberfläche der Platte (100) formschlüssig mit einer Oberfläche des Basiselements verbunden ist, wenn die Platte (100) in der Aussparung (220) angeordnet ist.

8. Befestigungskonstruktion (10) nach Anspruch 7,
wobei die Oberfläche der Platte (100) und die Oberfläche des Basiselements eine Tarnoberflächenstruktur (140; 230) aufweisen.

9. Luftfahrzeug (1), das eine Befestigungskonstruktion (10) nach einem der Ansprüche 5 bis 8 umfasst.

## Revendications

1. Ensemble de fixation comprenant
un panneau (100), pouvant être raccordé de manière détachable à un dispositif d'ouverture (20), de telle sorte que le panneau (100) puisse être retiré d'une construction de fixation (10) et réinséré dans celle-ci au moyen du dispositif d'ouverture (20), le panneau (100) comprenant
un électroaimant permanent (110) qui est intégré dans le panneau (100) ; et
une bobine d'induction (120) qui est connectée à l'électroaimant permanent (110) et qui est conçue pour conduire un courant induit dans la bobine d'induction (120) jusqu'à l'électroaimant permanent (110) de telle sorte que l'électroaimant permanent (110) puisse être commuté entre un état magnétique et un état non magnétique ; l'ensemble de fixation comprenant en outre :
le dispositif d'ouverture (20), comprenant
au moins un élément de réception (21) qui est conçu pour produire un raccordement détachable au panneau (100) afin de retirer et réinsérer le panneau (100) dans la construction de fixation (10) ;
une source d'énergie électrique (22) ; et
une bobine d'induction (23) qui est connectée à la source d'énergie électrique (22) et conçue pour induire un courant dans la bobine d'induction (120) du panneau (100) lorsque l'au moins un élément de réception (21) est connecté au panneau (100).

2. Ensemble de fixation selon la revendication 1,
dans lequel l'unité de bobine d'induction (120) est intégrée dans le panneau (100).

3. Ensemble de fixation selon la revendication 2,
dans lequel le panneau (100) a une marque externe (130) qui indique la position de la bobine d'induction (120).

4. Ensemble de fixation selon la revendication 3,
dans lequel la marque externe (130) se présente sous la forme d'une structure de surface.

5. Construction de fixation (10) à utiliser avec l'ensemble de fixation selon l'une quelconque des revendications 1 à 4 ; la construction de fixation (10) comprenant le panneau (100) dudit ensemble de fixation et comprenant en outre
un élément de base (200) ayant un ferroaimant (210) qui est conçu pour raccorder le panneau (100) à l'élément de base (200) lorsque l'électroaimant permanent (110) du panneau (100) est dans l'état magnétique.

6. Construction de fixation (10) selon la revendication 5,
dans laquelle l'élément de base (200) a un évidement (220) qui est adapté à la forme du panneau (100).

7. Construction de fixation (10) selon la revendication 6,
dans laquelle l'évidement (220) est désigné de telle sorte qu'une surface du panneau (100) soit raccordée positivement à une surface de l'élément de base lorsque le panneau (100) est disposé dans l'évidement (220).

8. Construction de fixation (10) selon la revendication 7,
dans laquelle la surface du panneau (100) et la surface de l'élément de base ont une structure de surface de camouflage (140 ; 230).

9. Aéronef (1) comprenant une construction de fixation (10) selon l'une quelconque des revendications 5 à 8.
